# EUROPEAN PATENT APPLICATION

(11) **EP 3 664 425 A1**
(43) Date of publication of application: **10.06.2020**
(21) Application number: 19207670.1
(22) Date of filing: 07.11.2019
(51) Int. Cl.: H04M 1/725, G06K 9/00, G06T 13/40, H04N 7/15, H04N 21/44, H04N 21/4788, H04N 21/81

(54) **METHOD AND DEVICE FOR GENERATING AND DISPLAYING AN ELECTRONIC AVATAR**

(30) Priority: 04.12.2018 US 201816208927
(71) Applicant: Robert Bosch GmbH, 70442 Stuttgart (DE)
(72) Inventor: Meister, Dietmar, Cupertino, California, 95014 (US); Wensley, Paul, Half Moon Bay, CA, 94019 (US)
(74) Representative: Isarpatent

(57) **Abstract**

A contextually-aware graphical avatar system includes a cue capturing assembly and a user device. The cue capturing assembly includes a visual cue capturing unit configured to generate agent video data of a human agent, and a visual cue encoder configured to process the agent video data to generate visual cue data corresponding to visual cues of the human agent. The user device is configured to receive the visual cue data. The user device includes (i) an avatar rendering unit configured to modify a graphical avatar, such that visual cues of the graphical avatar correspond to the visual cues of the human agent, and (ii) a display screen configured to display the modified graphical avatar. The system increases the efficiency with which the visual cues of the agent are conveyed as compared to receiving and to displaying the agent video data on the display of the user device.

## Description

### Field

This disclosure relates to the field of electronic avatars and, in particular, to generating and displaying an electronic avatar on a user device.

### Background

Electronic avatars are a graphical representation and/or manifestation of a person or virtual being. Users encounter avatars in the digital world when a picture or animation is associated with an online persona. The online persona may be that of another person or may be that of a virtual person or a virtual assistant, such as a customer service computer program.

Typically, electronic avatars are contextually unaware. That is, the typical electronic avatar has the same appearance regardless of the context in which the avatar appears. For example, in a customer service environment, an avatar may include a representation of a static person's face showing a happy, smiling, and pleasant demeanor to reflect the helpful attitude of the person or program behind the avatar. Whereas, in a medical care environment, an avatar may include a representation of a person's face showing a serious, concerned, and authoritative demeanor to reflect the seriousness of the situation and the person or program behind the avatar.

The contextual unawareness of typical electronic avatars becomes apparent in real-world scenarios. For example, in some situations, a customer service agent discusses a serious issue, such as the denial of a customer's credit card. In this situation, it is contextually inappropriate and/or insensitive for the customer service electronic avatar to maintain a smiling and happy expression. Similarly, in some instances, a medical professional delivers uplifting news, but the electronic avatar maintains an unchanging serious appearance that is unbefitting to the context of the communication session.

Based on the above, improvements to the representation of electronic avatars based on the context of the situation are desirable to improve the user experience.

### Summary

According to an exemplary embodiment of the disclosure, a contextually-aware graphical avatar system includes a cue capturing assembly and a user device. The cue capturing assembly includes a visual cue capturing unit configured to generate agent video data of a human agent, and a visual cue encoder configured to process the agent video data to generate visual cue data corresponding to visual cues of the human agent. The user device is configured to receive the visual cue data and includes (i) an avatar rendering unit configured to modify a graphical avatar based on the visual cue data, such that visual cues of the graphical avatar correspond to the visual cues of the human agent, and (ii) a display screen configured to display the modified graphical avatar in order to convey the visual cues of the human agent. The graphical avatar system increases the efficiency with which the visual cues of the human agent are conveyed as compared to receiving and to displaying the agent video data on the display screen of the user device.

According to another exemplary embodiment of the disclosure, a method of generating and displaying a contextually-aware graphical avatar on a user device includes capturing agent video data of a human agent with a cue capturing assembly, and encoding the captured agent video data to generate visual cue data corresponding to visual cues of the human agent with a visual cue encoder of the cue capturing assembly. The method further includes transmitting the visual cue data from the cue capturing assembly to the user device without transmitting the captured agent video data to the user device, and modifying the graphical avatar based on the transmitted visual cue data with an avatar rendering unit of the user device, such that visual cues of the graphical avatar correspond to the visual cues of the human agent. The method also includes displaying the modified graphical avatar on a display screen of the user device in order to convey the visual cues of the human agent to a user of the user device, and conveying the visual cues of the human agent to the user using the modified graphical avatar without transmitting the captured agent video data to the user device to increase the efficiency with which the visual cues of the human agent are conveyed as compared to receiving and to displaying the agent video data on the display screen of the user device.

### Brief Description of the Figures

The above-described features and advantages, as well as others, should become more readily apparent to those of ordinary skill in the art by reference to the following detailed description and the accompanying figures in which:
FIG. 1 is a block diagram of a contextually-aware graphical avatar system including a cue capturing assembly and a user device configured to display an avatar;
FIG. 2 illustrates the avatar of FIG. 1 having a normal expression;
FIG. 3 illustrates the avatar of FIG. 1 having a happy expression;
FIG. 4 illustrates the avatar of FIG. 1 having an authoritative expression;
FIG. 5 is a block diagram of the cue capturing assembly of FIG. 1;
FIG. 6 is a block diagram of visual cue data generated by the cue capturing assembly of FIG. 1;
FIG. 7 is a block diagram of the user device of FIG. 1;
FIG. 8 is a flowchart illustrating an exemplary method of operating the avatar system of FIG. 1;
FIG. 9 is a diagram illustrating various positions and configurations of a left eyebrow of the avatar of FIG. 1;
FIG. 10 is a diagram illustrating various positions and configurations of a left eye of the avatar of FIG. 1; and
FIG. 11 is a diagram illustrating various positions and configurations of a mouth of the avatar of FIG. 1.

### Detailed Description

For the purpose of promoting an understanding of the principles of the disclosure, reference will now be made to the embodiments illustrated in the drawings and described in the following written specification. It is understood that no limitation to the scope of the disclosure is thereby intended. It is further understood that this disclosure includes any alterations and modifications to the illustrated embodiments and includes further applications of the principles of the disclosure as would normally occur to one skilled in the art to which this disclosure pertains.

Aspects of the disclosure are disclosed in the accompanying description. Alternate embodiments of the disclosure and their equivalents may be devised without parting from the spirit or scope of the disclosure. It should be noted that any discussion herein regarding "one embodiment", "an embodiment", "an exemplary embodiment", and the like indicate that the embodiment described may include a particular feature, structure, or characteristic, and that such particular feature, structure, or characteristic may not necessarily be included in every embodiment. In addition, references to the foregoing do not necessarily comprise a reference to the same embodiment. Finally, irrespective of whether it is explicitly described, one of ordinary skill in the art would readily appreciate that each of the particular features, structures, or characteristics of the given embodiments may be utilized in connection or combination with those of any other embodiment discussed herein.

For the purposes of the disclosure, the phrase "A and/or B" means (A), (B), or (A and B). For the purposes of the disclosure, the phrase "A, B, and/or C" means (A), (B), (C), (A and B), (A and C), (B and C), or (A, B and C).

The terms "comprising," "including," "having," and the like, as used with respect to embodiments of the disclosure, are synonymous.

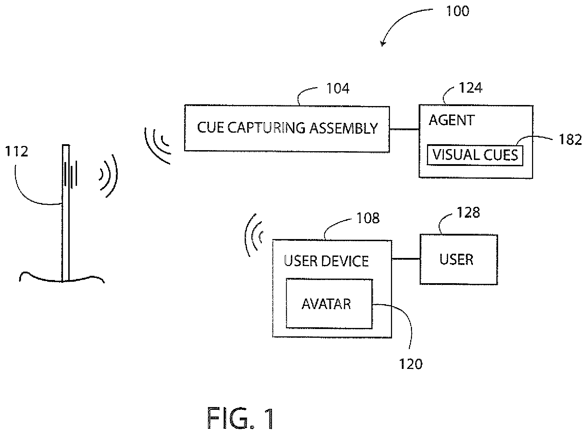

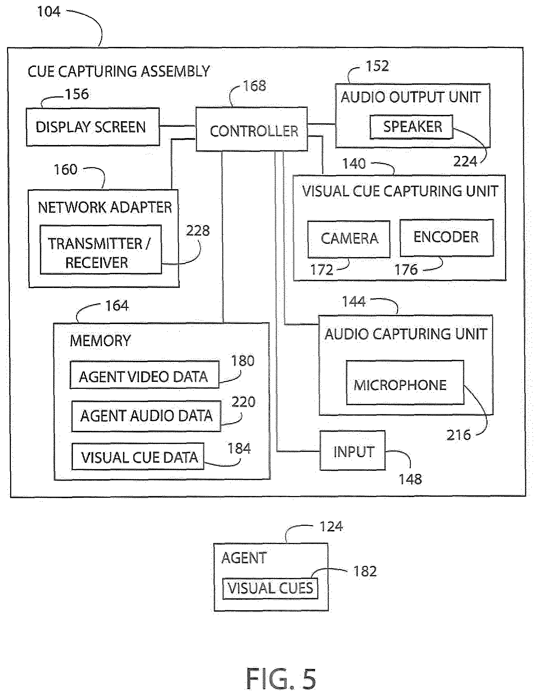

As shown in FIG. 1, a contextually-aware graphical avatar system 100 includes a cue capturing assembly 104 and a user device 108 configured to transmit electronic data over an electronic network 112. The user device 108 is configured to display a graphical electronic avatar 120 having an appearance that changes in real-time based on detected visual cues, expressions, and emotions of a human agent 124 operating the cue capturing assembly 104. For example, in response to the agent 124 exhibiting a "normal" expression the avatar 120 exhibits a "normal" expression. If the agent 124 changes her expression to a "happy" expression, then the expression of the avatar 120 is automatically changed in real-time to a corresponding "happy" expression. The change in appearance of the avatar 120 is efficiently accomplished by sending data related to the expressions and emotions of the agent 124 (*i*.*e*. visual cue data 184, FIG. 5) to the user device 108 instead of sending image data of the agent 124 (*i*.*e*. agent video data 180, FIG. 5) to the user device 108. The visual cue data 184 uses significantly less network bandwidth during transmission than would the agent video data 180. Thus, the avatar system 100 is a data efficient system for generating an avatar 120 having an appearance that changes in real-time based on the changing context of an interaction between a user 128 and a remote agent 124. Another benefit of the avatar system 100 is that no portion of the agent 124 is shown to the user 128 of the user device 108. Accordingly, the avatar system 100 is easier and more cost-effective than past systems that include video of the agent 124 and that require the agent 124 to conform to a dress code and an appearance requirement. Moreover, in at least one embodiment, every user 128 of the user device 108 is presented with the same avatar 120 that conforms with the selection for that specific company or brand, thereby ensuring that the company's standards and requirements are satisfied.

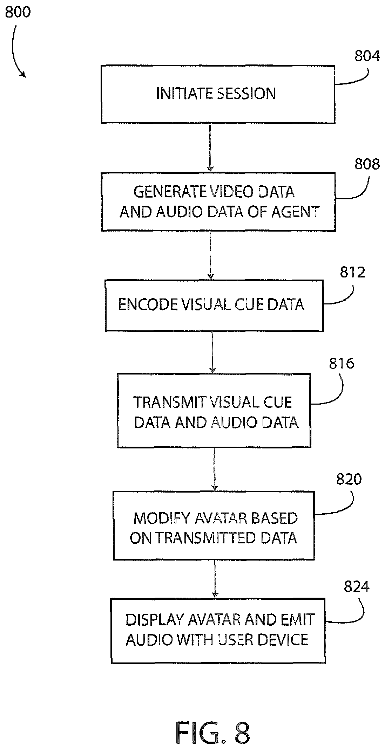

Each element of the avatar system 100 is described below along with a method 800 (FIG. 8) of operating the avatar system 100.

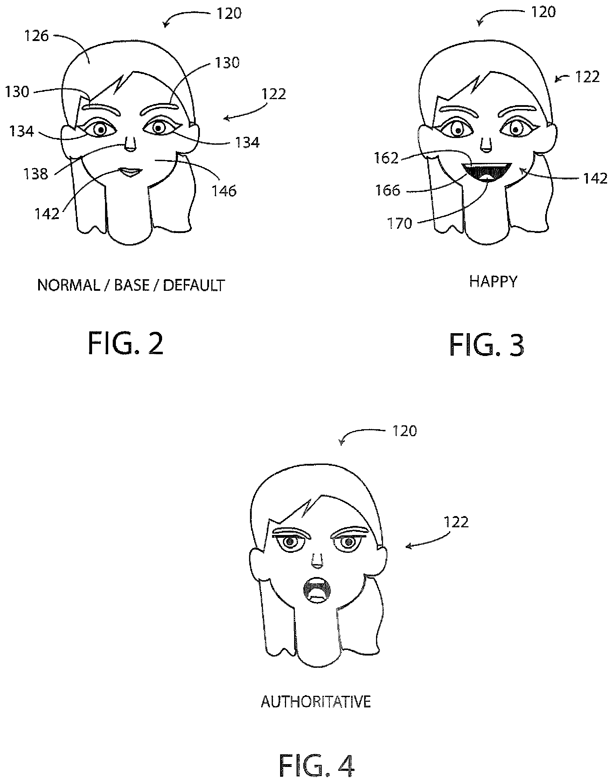

With reference to FIGs. 2, 3, and 4, the exemplary avatar 120 is shown as the neck and head of a woman in a "cartoon" style. The avatar 120, in the illustrated embodiment, is a 3D animated model having various visual cues 122 including hair 126, eyebrows 130, eyes 134, nose 138, mouth 142, and head 146. In other embodiments, the avatar 120 is a 2D animated model, a warped 2D video, or an artificial intelligence ("AI") altered video. An AI altered video appears to be real video footage of a person speaking dialogue, for example, but is actually modified video footage generated by an AI, such as the cue capturing assembly 104. As disclosed herein, the avatar 120 is changed, manipulated, and/or "animated" based on the context of the interaction between the agent 124 and the user 128. The avatar 120 in FIG. 2 exhibits a normal, base, and/or default expression that is suitable to at least begin most communication sessions in which the avatar system 100 is used. Whereas, as shown in FIG. 3, the avatar 120 exhibits a happy and an excited expression in which the shape of the eyebrows 130, eyes 134, and mouth 142 have changed to convey the current context. As shown in FIG. 4, the avatar 120 exhibits an authoritarian or a serious expression in which the shape of the eyebrows 130, eyes 134, and mouth 142 have changed yet again to convey the current context. As described below, the avatar 120 is not limited to the three exemplary expressions/emotions of FIGs. 2-4. Typical emotions and expression of the avatar 120 include happiness, concern, fear, sadness, excitement, frustration, condolence, and the like.

The avatar 120 may be rendered on the user device 108 in full color, selected colors, greyscale, or black and white, depending on the embodiment and the application. The avatar 120 may be rendered in a photorealistic style or in a simple abstract or cartoon style. Moreover, in other embodiments of the avatar system 100, the avatar 120 has different types, such as a man, an animal, a child, a toddler, a baby, and/or a non-human cartoon or character having human-like features capable of expressing human emotions and expressions. The avatar system 100 may change the type of the avatar 120 in real time based on a detected context.

With reference to FIG. 5, the cue capturing assembly 104 includes a visual cue capturing unit 140, an audio capturing unit 144, an input device 148, an audio output unit 152, a display screen 156, a network adapter 160, and a memory 164, each operably connected to a controller 168. The visual cue capturing unit 140, in one embodiment, has a camera 172 and a visual cue encoder 176. The camera 172 is configured to capture/generate agent video data 180 corresponding to images of the agent 124 operating the cue capturing assembly 104. The agent video data 180 is stored in the memory 164. The camera 172 is a digital camera or any type of camera configured to generate electronic image data to be stored as the agent video data 180.

The visual cue encoder 176 of the visual cue capturing unit 140 is configured to process the agent video data 180 and agent audio data 220 to generate visual cue data 184 that corresponds to visual cues 182 of the agent 124 and that controls the appearance of the avatar 120. The visual cue data 184 is used by the avatar system 100 to match the expression(s), gesture(s), posture, mouth movement, and other visual cues 122 of the avatar 120 to the expression(s), gesture(s), posture, mouth movement, and other visual cues 182 of the agent 124 in a way that the appearance of the avatar 120, including the mouth movement, is synchronized with the audio data 220. The visual cue data 184 does not include the agent video data 180 and is different from the agent video data 180. The visual cue data 184 does not include image data of the agent 124 and cannot be used to generate image data of the agent 124.

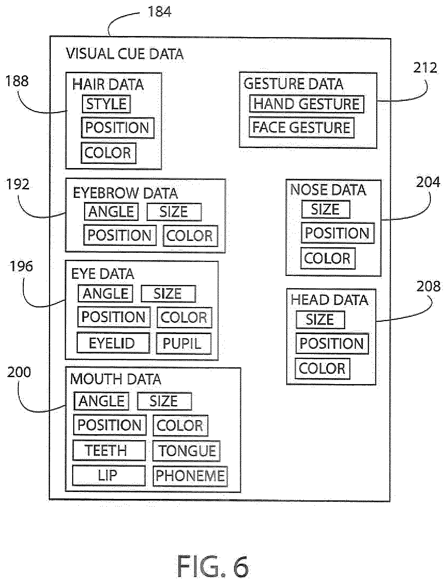

As shown in FIG. 6, the visual cue data 184 stored in the memory 164 of the cue capturing assembly 104 includes data pertaining to each of the visual cues 122 of the avatar 120 that are adaptable to correspond to the detected visual cues 182 of the human agent 124. For example, the visual cue data 184 includes hair data 188, eyebrow data 192, eye data 196, mouth data 200, nose data 204, head data 208, and gesture data 212 of the avatar 120. The visual cue capturing unit 140 captures the agent video data 180 and encodes the data 180 as the visual cue data 184 using the encoder 176. The visual cue data 184 includes data that is organizable into at least some of the data categories shown in FIG. 6 based on complexity and adaptability of the avatar 120.

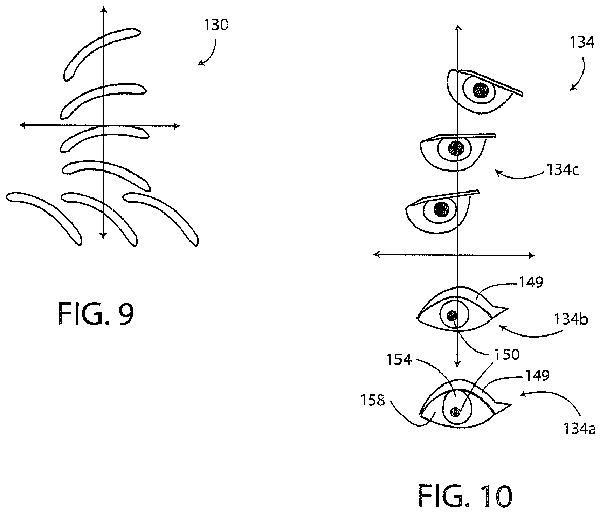

For example, the hair data 188 of the visual cue data 184 determines the style, position, and color of the hair 126 of the avatar 120. The eyebrow data 192 determines the angle, size, position, and color of the eyebrows 130 of the avatar 120. Each eyebrow 130 is individually controllable, and an exemplary eyebrow 130 is shown in multiple positions and angles in FIG. 9. The eye data 196 determines the angle, size, position, color, eyelid state, and pupil of the eyes 134 of the avatar 120. Each eye 134 is individually controllable. The eye position data of the eye data 196 determines the position of each eye 134 relative to other features and visual cues 122 of the avatar 120. The eyelid data of the eye data 196 is used to make the avatar 120 appear to blink her eyelids 149 or close her eyelids 149 at appropriate instances. The eye pupil data of the eye data 196 determines the direction in which the avatar 120 appears to be looking by controlling the position of the pupil 150 (FIG. 10). The eye size data of the eye data 196 determines the overall size of the eye 134 in relation to other features and visual cues 122 of the avatar 120. The eye color data of the eye data 196 determines the color of the various parts of the eye including the iris 154 (FIG. 10), the pupil 150, and the sclera 158 (FIG. 10). An exemplary eye 134 is shown in multiple positions and angles in FIG. 10.

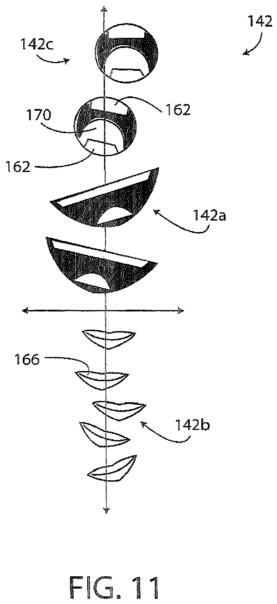

The mouth data 200 of the visual cue data 184 determine the angle, size, position, color of the mouth 142 of the avatar 120, as well as the appearance of the teeth 162 (FIG. 3), lips 166 (FIG. 3), and tongue 170 (FIG. 3). The mouth angle data of the mouth data 200 determines an angle of the mouth 142. The mouth size data of the mouth data 200 determines the size of the mouth 142 in relation to other features and visual cues 122 of the avatar 120. The mouth position data of the mouth data 200 determines the position of the mouth 142 relative to other features and visual cues 122 of the avatar 120. The mouth color data of the mouth data 200 determines the color of the various parts of the mouth 142 of the avatar 120. The teeth data of the mouth data 200 determines the appearance, color, and position of the teeth 162. The lip data of the mouth data 200 determines the appearance, color, and position of the lips 166. The tongue data of the mouth data 200 determines the appearance, color, and position of the tongue 170. An exemplary mouth 142 of the avatar 120 is shown in multiple positions and angles in FIG. 11. The mouth 142 may be shown in an open position, a closed position, and in various shapes based on the mouth data 200.

The mouth data 200 are also based on phonemes of the agent 124, which are sounds used to form spoken words. Phonemes typically have certain corresponding mouth positions. The mouth data 200 are configured to position the various configurable portions of the mouth 142 based on the phonemes spoken by the agent 124, such that the mouth 142 of the avatar 120 appears to move in synchronization with each phoneme spoken by the agent 124.

The gesture data 212 determines the presence and the appearance of hand gestures and facial gestures of the avatar 120, as described below.

The nose data 204 determines the size, position, and color of the nose 138 of the avatar 120. The nose data 204 may also control the avatar 120 as having a normal nose 138 and a "wrinkled" nose 138 as accompanies some human expressions.

The head data 208 determines the size, position, and color of the head 146. The head data 208 controls the avatar 120 as having a normal forehead and a "wrinkled" forehead as accompanies some human expressions.

With reference again to FIG. 5, the audio capturing unit 144 includes a microphone 216 and is configured to generate/record agent audio data 220 based on sounds emitted by the agent 124. For example, the microphone 216 detects that the agent 124 is talking and stores the agent audio data 220 corresponding to the speech emitted by the agent 124. The microphone 216 is provided as any type of microphone configured to generate digital audio data. The microphone 216 may be mounted on a headset worn by the agent 124. The audio capturing unit 144 records audio from the agent 124.

The input device 148 is typically configured as a mouse and a keyboard used by the agent 124 to input data, such as text and numbers, into the cue capturing assembly 104. The input device 148 includes any other/additional computer peripheral device. In some embodiments, the cue capturing assembly 104 does not include the input device 148.

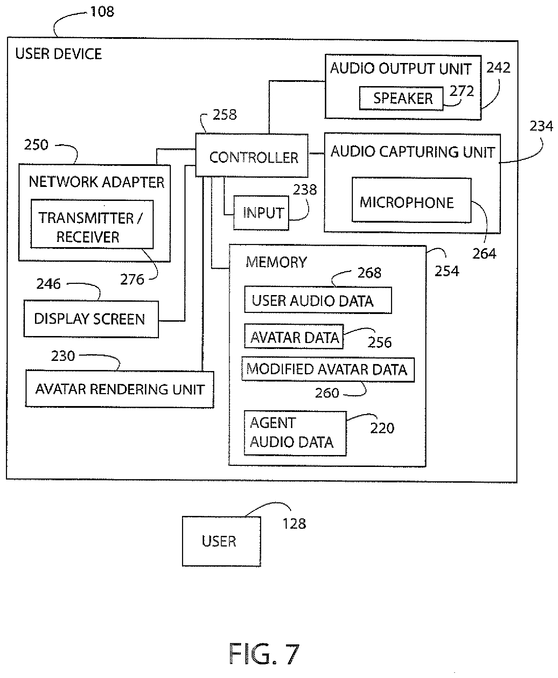

The audio output unit 152 of the cue capturing assembly 104 is configured to emit sound to the agent. Typically, the audio output unit 152 includes a speaker 224 configured to emit sound based on user audio data 268 (FIG. 7) transmitted from the user device 108 to the cue capturing assembly 104. The audio output unit 152, therefore, enables the agent 124 to hear sounds emitted and spoken by the user 128 in substantially real time. The speaker 224 may be mounted on a headset worn by the agent. In some embodiments, the cue capturing assembly 104 does not include the audio output unit 152.

The display screen 156 of the cue capturing assembly 104 is configured to display data to the agent 124 during operation of the cue capturing assembly 104. The display screen 156 may be configured as a computer display. In some embodiments, the cue capturing assembly 104 does not include the display screen 156.

The network adapter 160 is operably connected to the electronic network 112 and is configured to receive data from the electronic network 112 and to transmit data to the electronic network 112. In one embodiment, the network adapter 160 includes a wireless transmitter/receiver 228 configured to wirelessly transmit and receive data. In another embodiment, the transmitter/receiver 228 includes a wired connection to the electronic network 112.

With reference to FIG. 5, the memory 164 of the cue capturing assembly 104 is an electronic data storage unit, which is also referred to herein as a non-transient computer-readable medium. The memory 164 is configured to store the agent video data 180, the visual cue data 184, the agent audio data 220, and any other electronic data associated with the avatar system 100.

The controller 168 of the cue capturing assembly 104 is configured to execute program instructions for controlling the visual cue capturing unit 140, the audio capturing unit 152, the input device 148, the audio output unit 152, the display screen 156, the network adapter 160, and the memory 164. The controller 168 is configured as a microprocessor, a processor, or any other type of electronic control chip.

With reference to FIG. 7, the user device 108 is typically remotely located from the cue capturing assembly 104 and is operably connected to the cue capturing assembly 104 by way of the electronic network 112. In one embodiment, the user device 108 is a passenger vehicle, such as a typical sedan. In another embodiment, the user device 108 is an autonomous vehicle that carries passengers and is partially or fully autonomous. That is, the user device 108 may be a vehicle having any level of autonomy from level 0 to level 5. In a further embodiment, the user device 108 is a display in a vehicle. The user device 108 may be owned by the user 128, rented by the user 128, or only temporarily accessed by the user 128 *(i.e.* a shared user device 108). In yet another embodiment, the user device 108 is a smartphone, a smartwatch, a personal computer, a tablet computer, or the like.

The user device 108 includes an avatar rendering unit 230, an audio capturing unit 234, an input device 238, an audio output unit 242, a display screen 246, a network adapter 250, and a memory 254, each operably connected to a controller 258. The rendering unit 230 is configured to modify the avatar 120 based on the visual cue data 184 generated by the cue capturing assembly 104, such that the visual cues 122 of the avatar 120 correspond to visual cues 182 of the agent 124. Specifically, the rendering unit 230 changes / modifies avatar data 256 based on the visual cue data 184 to generate modified avatar data 260 suitable for rendering on the display screen 246 of the user device 108. For example, if the visual cue data 184 indicates that the agent 124 has moved her left eyebrow upwards relative to her nose, then the rendering unit 230 modifies the avatar data 256 so that the left eyebrow 130 of the avatar 120 moves upwards relative to the nose 138. Accordingly, the rendering unit 230 processes the visual cue data 184 to adapt the expression/demeanor/visual cues 122 of the avatar 120 in real time to correspond to the expression/demeanor/visual cues 182 of the agent 124.

The audio capturing unit 234 of the user device 108 includes a microphone 264 and is configured to generate user audio data 268 based on sounds emitted by the user 128. For example, the microphone 264 detects that the user 128 is speaking/talking and stores user audio data 268 corresponding to the speech emitted by the user 128. The microphone 264 is provided as any type of microphone configured to generate digital audio data. In some embodiments, the user device 108 does not include the audio capturing unit 234.

In FIG. 7, the exemplary input device 238 of the user device 108 is configured as a touchscreen overlaid upon the display screen 246. The input device 238 enables the user 128 to input data into the user device 108. The input device 238 may also include the microphone 264, such that the user device 108 is configured to receive verbal or spoken user inputs. The input device 238, in other embodiments, includes buttons, switches, keyboards, and/or any other suitable device for receiving user inputs. In some embodiments, the user device 108 does not include the input device 238.

The audio output unit 242 of the user device 108 is configured to emit sound to the user 128. Typically, the audio output unit 242 includes a speaker 272 configured to emit sound based on the agent audio data 220 (FIG. 5) transmitted from the cue capturing assembly 104 to the user device 108. The audio output unit 242, therefore, enables the user 128 to hear sounds emitted by the agent 124.

The display screen 246 of the user device 108 is configured to display data to the user 128 during operation of the user device 108. The avatar 120 is displayed on the display screen 246. In one embodiment, the display screen 246 is a liquid crystal flat panel color display included in an infotainment system of a vehicle, such as an autonomous vehicle or a user-guided vehicle. In a specific embodiment, the display screen 246 is included as part of the control system of a shared autonomous vehicle that is not user-driven. In another embodiment, the display screen 246 is included in a personal electronic device of the user 128, such as a smartphone or tablet. In other embodiments, the display screen 246 is a black and white display screen and/or an e-ink display screen.

The network adapter 250 of the user device 108 is operably connected to the electronic network 112 and is configured to receive data from the electronic network 112 and to transmit data to the electronic network 112. In one embodiment, the network adapter 250 includes a wireless transmitter/receiver 276 configured to wirelessly transmit and receive data. In another embodiment, the transmitter/receiver 276 includes a wired connection to the electronic network 112.

With reference to FIG. 7, the memory 254 of the user device 108 is an electronic data storage unit, which is also referred to herein as a non-transient computer-readable medium. The memory 254 is configured to store the avatar data 256, the modified avatar data 260 that has been modified on the visual cue data 184, the user audio data 268, and the transferred agent audio data 220 from the cue capturing assembly 104. The memory 254 may also store any other electronic data associated with the avatar system 100. For example, the memory 254 stores the visual cue data 184 after the visual cue data 184 is generated by the cue capturing assembly 104 and transmitted to the user device 108 by way of the electronic network 112.

The controller 258 of the user device 108 is configured to execute program instructions for controlling the avatar rendering unit 230, the audio capturing unit 234, the input device 238, the audio output unit 242, the display screen 246, the network adapter 250, and the memory 254. The controller 258 is configured as a microprocessor, a processor, or any other type of electronic control chip. Moreover, the controller 258 manages the synchronization between the avatar rendering unit 230 and the audio output unit 242 in order to synchronize the agent audio data 220 with the movements of the avatar 120.

In operation and with reference to the flowchart of FIG. 8, the avatar system 100 is configured to implement a method 800 for generating and displaying the contextually-aware graphical avatar 120. As shown in block 804, the method 800 includes initiating a communication session. The communication session is initiated by either the user 128 or the agent 124. The user 128 and the agent 124 may be any distance apart from each other so long as each party is able to send and to receive electronic data using the electronic network 112.

When a communication session is desired, the user 128 inputs a corresponding command to the user device 108 using the input device 238, which causes the user device 108 to send a session request signal to the cue capturing assembly 104 by way of the electronic network 112. The human agent 124 accepts the session request to form a data link between the user device 108 and the cue capturing assembly 104 by which the user 128 and the agent 124 can communicate. Additionally or alternatively, the communication session is established when the agent 124 inputs a corresponding command to the cue capturing assembly 104 using the input device 148, which causes the cue capturing assembly 104 to send the session request signal to the user device 108 by way of the electronic network 112. The user 128 accepts the session request to form the data link between the user device 108 and cue capturing assembly 104. In some embodiments, the agent 124 is able to establish a communication session and a data link with the user device 108 without any action, input, agreement, or acknowledgment from the user 128, such as in an emergency situation.

When the communication session is established, typically the avatar 120 is displayed on the display screen 246 of the user device 108, and the agent 124 and the user 128 are able to communicate verbally with full-duplex data transmission. At the beginning of the session, the avatar 120 is typically displayed in a base format, as shown in FIG. 2. In the base format, which is also referred to herein as a default format and a neutral format, the avatar 120 is not modified using the visual cue data 184.

Next, in block 808 of FIG. 8, the cue capturing assembly 104 generates the agent video data 180 and the agent audio data 220. Specifically, with the camera 172 trained on the face of the human agent 124, the camera 172 generates the agent video data 180 and the controller 168 stores the agent video data 180 in the memory 164. In one embodiment, the agent video data 180 is stored to the memory 164 at a bitrate of about two megabits per second (2Mbps) to about twenty megabits per second (20Mbps). The agent video data 180 is saved to the memory 164 in any desired electronic video format. Moreover, the agent video data 180 is saved to the memory 164 for a predetermined time period before being deleted. The predetermined time period for saving the agent video data 180 is from five seconds to eight hours.

The camera 172 is typically positioned to capture video of the agent 124 that corresponds to the adaptable visual cues 122 of the avatar 120. Accordingly, for example, if the mouth 142 is the only visual cue 122 of the avatar 120 that is adaptable then only the mouth of the agent 124 is included in the frame of the agent video data 180. Whereas, if the visual cues 122 of the avatar 120 include hair 126, eyebrows 130, eyes 134, nose 138, and mouth 142, then the hair, eyebrows, eyes, nose, and mouth of the agent 124 are included in the frame of the agent video data 180.

During the communication session, the agent audio data 220 is stored to the memory 164 in a compressed file format (lossy or lossless). Exemplary formats include FLAC, MP3, and OGG, and any other file format may be used.

Next, in block 812 of FIG. 8, the encoder 176 of the visual cue capturing unit 140 processes the agent video data 180 to generate the visual cue data 184 based on the expressions and emotions presently exhibited by the human agent 124 in response to the context of the communication session with the user 128. The encoding process includes using a computer vision program, or the like, to identify automatically the visual cues 182 of the human agent 124 in the agent video data 180. Typically, the encoding process only identifies visual cues 182 of the agent 124 that are adaptable by the avatar 120. For example, if the avatar 120 includes adaptable eyebrows 130 and eyes 134, but does not include an adaptable nose 138, the visual cue capturing unit 140 conserves resources and operates efficiently by generating visual cue data 184 corresponding to only the eyebrows and the eyes of the human agent 124 and not the nose of the human agent 124.

The visual cue data 124 includes information related to at least some of the visual cues 122 of the avatar 120 that are adaptable based on the context of the communication session and the present appearance of the agent 124. The avatar 120 shown in FIGs. 2-4 includes adaptable visual cues 122 including hair 126, eyebrows 130, eyes 134, nose 138, mouth 142, head 146, eyelids 149, pupils 150, teeth 162, lips 166, and tongue 170, as identified by the list of visual cues 122 saved in the visual cue data of FIG. 6. In processing the agent video data 180, the cue capturing assembly 104 generates visual cue data 184 for all or a subset these visual cues 122.

In an example, the encoder 176 processes the agent video data 180 and determines that the human agent 124 has brown eyebrows and that the left eyebrow of the agent 124 moves from a first position at a first time to a second position at a second time. The corresponding visual cue data 184 may include, for example, the following information:
left eyebrow color = brown;
left eyebrow position at time 1 = 22, 35;
left eyebrow angle at time 1 = 10°;
left eyebrow position at time 2 = 22, 45;
left eyebrow angle at time 2 = 10°.
The visual cue data 184 shown above is used to determine the color, location, and angle of the left eyebrow 130 of the avatar 120 at two different time periods. The position of the eyebrow 130 is in a Cartesian format relative to an origin, such as the nose 138. The position of the eyebrow 130 (and any other of the visual cues 122) may be provided in any suitable format relative to any selected point. Similar visual cue data 184 is generated by the encoder 176 for each other visual cue 122 of the avatar 120.

In another embodiment, instead of generating data for each of the visual cues 122 the encoder 176 "summarizes" the emotional state or the expression of the agent 124 with only one or more data points. For example, the encoder 176 may determine that the agent 124 is exhibiting an overall "happy" expression. The encoder 176 then generates visual cue data 184 such as "avatar state = happy." The visual cue data 184 causes the avatar 120 to have a "happy" expression that may or may not correspond exactly to the appearance of the agent 124. This approach reduces even further the network bandwidth required to make the avatar 120 contextually aware. Other "summarized" expressions and emotions include surprise, concern, fear, sadness, and excitement.

In addition to determining the visual cue data 184 based on the facial expressions of the agent 124, the visual cue data 184 may also be determined based on various gestures, body language movement, and other non-verbal communication cues of the agent 124. For example, in processing the agent video data 180, the encoder 176 is configured to determine when the agent 124 nods her head such as to agree with the user 128 or to acknowledge what the user 128 is saying. Data corresponding to the head nod of the agent 124, and other head movements of the agent 124, are stored as the visual cue data 184. Moreover, the encoder 176 determines when the agent 124 shakes her head in disagreement or disapproval and generates corresponding visual cue data 184. As described below, the visual cue data 184 causes the avatar 120 to exhibit the same and/or a similar gesture and body language as exhibited by the agent 124.

The encoder 176 also identifies hand or arm gestures made by the agent 124 in the agent video data 180. For example, if the agent 124 makes the "ok" hand gesture, the encoder 176 generates corresponding visual cue data 184 that causes the avatar 120 to exhibit the same and/or a similar gesture as exhibited by the agent 124. Exemplary hand gestures that are detectable by the encoder 176 include pointing in a particular direction with the hand or hands of the agent 124, touching the face of the agent 124 with the hand of the agent 124, adjusting the hair of the agent 124 with the hand of the agent 124, making a "thumbs-up" or a "thumbs-down" with the hand of the agent 124, waving "hello" or "goodbye," and raising the arms of the agent 124.

The visual cue data 184 is orders of magnitude smaller in size than the agent video data 180. The visual cue data 184, in one example, is saved to the memory 164 at a rate of about 0.25 kilobytes per second (0.25 kB/sec) of corresponding agent video data 180 to about 1.0 kilobyte per second (1 kB/sec) of corresponding agent video data 180.

Next, as shown in block 816, the visual cue data 184 and the agent audio data 220 are sent from the cue capturing assembly 104 to the user device 108 so that the user device 108 can adapt and change the avatar 120 to correspond to the emotions and expressions of the human agent 124, as well as to correspond to the context of the communication session. The visual cue data 184, along with the agent audio data 220, is transferred from the cue capturing assembly 104 to the user device 108 using the electronic network 112. It is far more efficient to transmit the visual cue data 184 from the cue capturing assembly 104 to the user device 108 than to transmit the agent video data 180 from the cue capturing assembly 104 to the user device 108. Moreover, due to the small overall size of the visual cue data 184 and the agent audio data 220, the visual cue data 184 and the agent audio data 180 can be streamed in real time from the cue capturing assembly 104 to the user device 108 through the electric network 112 with very little effective lag or delay in the data transmission.

In block 820 of the method 800, the visual cues 122 of the avatar 120 are modified in real-time based on the received visual cue data 184. Specifically, after receiving the visual cue data 184, the controller 258 of the user device 108 modified, alters, or updates the avatar data 256 to form the modified avatar data 260. The modified avatar data 260 represents the avatar 120 in a configuration that corresponds to the current expressions and emotions of the agent 124.

For example, in a first time period, the agent 124 exhibits a first facial expression and the visual cue data 184 correspond to the first facial expression. When the avatar data 256 is modified based on the visual cue data 184 of the first time period, the modified graphical avatar 120 exhibits the first facial expression. Then during a second time period, the visual cue data 184 corresponds to a second facial expression made by the agent 124 that is different from the first facial expression. When the avatar data 256 is modified based on the visual cue data 184 of the second time period, the modified graphical avatar 120 exhibits the second facial expression. In this example, the human agent 124 changes from the first facial expression to the second facial expression based on a context of a conversation between the human agent 124 and the user 128, and the modified graphical avatar 120 as displayed on the display screen 246 conveys the context of the conversation to the user 128.

Modifying the visual cues 122 of the avatar 120 enables the avatar 120 to have any human expression by moving, reshaping, and repositioning the visual cues 122 of the avatar 120. With reference to FIG. 9, the left eyebrow 130 of the avatar 120 is shown in seven positions relative to a coordinate system having an origin. The visual cue data 184 controls the position and the angle of the eyebrow 130 and enables the eyebrow 130 to be moved to a position that corresponds to the position of the agent's left eyebrow. The three horizontally arranged eyebrows 130 are shown with different horizontal positions and have the same angle. The four vertically stacked eyebrows 130 have different vertical positions and different angular positions. The color of the eyebrow 130 is also determined by the visual cue data 184.

In FIG. 10, different embodiments of the avatar's left eye 134 are shown in multiple positions relative to a coordinate system having an origin. The eye 134a is typically used to convey a happy expression. The eye 134b is typically used to convey a normal expression. The eye 134c is typically used to convey an authoritative expression. The visual cue data 184 determines the position and size of the eyelid 149 and the pupil 150 in some embodiments of the avatar 120. Moreover, the visual cue data 184 determines the color of the iris 154 in some embodiments.

In FIG. 11, different embodiments of the avatar's mouth 142 are shown in multiple positions relative to a coordinate system. The mouth 142a is typically used to convey a happy expression. The mouth 142b is typically used to convey a normal expression. The mouth 142c is typically used to convey an authoritative expression. The visual cue data 184 determines the position and size of the teeth 162 and the tongue 162 in some embodiments of the avatar 120.

Modifying the mouth 142 of the avatar 120 based on the visual cue data 184 causes the avatar 120 to mimic the speech patterns of the agent 124 and makes the avatar 120 seem more "life-like" to the user 128. For example, certain speech patterns have corresponding mouth positions that are detectable as the visual cue data 184, including an open mouth, a closed mouth, and pursed lips to name just a few. The avatar 120 is configured to have the same mouth configuration as the agent 124 based on the visual cue data 184. As a result, the user 128 may bond with and trust the avatar 120 more so than if the user 128 simply hears the voice of the agent 124 or if the user 128 views a static avatar.

In block 824 of the flowchart of FIG. 8, after the controller 258 of the user device 108 forms the modified avatar data 260, the controller 258 configures the display 246 to display the avatar 120 in the configuration that corresponds to the modified avatar data 260. The avatar 120 is displayed in substantially real time with the corresponding facial movements, expressions, and gestures of the agent 124. The avatar 120 changing in real time enables the user to understand the context of the communication session with visual cues in addition to audio cues from the agent audio data 220.

An exemplary avatar 120 that is modified based on the visual cue data 184 is shown in FIGs. 2-4. The visual cues 122 of the avatar 120 in FIG. 2 have been moved, adjusted, arranged, and/or modified to have a generally neutral or default appearance or expression. If an agent 124 is not particularly expressive then the avatar 120 may remain in the general configuration of the avatar 120 shown in FIG. 2 for the duration of the communication session.

The visual cues 122 of the avatar 120 in FIG. 3 have been moved, adjusted, arranged, and/or modified to have a generally happy appearance or expression. If, during the communication session, the agent 124 smiles her mouth, eyes, and eyebrows will move. These movements are recorded in the agent video data 180 and detected by the encoder 176 as the visual cue data 184. The visual cue data 184 is processed by the controller 256 of the user device 108 to generate corresponding modified avatar data 260. The modified avatar data 260 results in the appearance of the avatar 120 on the display screen 246 changing in real time based on the current facial expression of the agent 124 and the context of the communication session.

The visual cues 122 of the avatar 120 in FIG. 4 have been moved, adjusted, arranged, and/or modified to have a generally authoritative appearance or expression. If, during the communication session, the agent 124 must issue important safety commands to the user 128 at the scene of an accident, for example, her facial features will naturally move to a position of seriousness and sternness. These movements are recorded in the agent video data 180 and detected by the encoder 176 as visual cue data 184. The visual cue data 184 is processed by the controller 258 of the user device 108 to generate corresponding modified avatar data 260. The modified avatar data 260 results in the appearance of the avatar 120 on the display screen 246 changing in real time based on the current facial expression of the agent 124 and the context of the communication session.

In the above-described method 800, the user device 108 may be a shared autonomous vehicle and the agent 124 may provide assistance to the user 128 of the vehicle. Accordingly, the avatar system 100 configures the vehicle to have an intelligent cockpit and cabin. For example, during the communication session, the agent 124 may provide comfort assistance by changing the temperature of the vehicle cabin, switching a music player of the vehicle to certain music selections, adapting the driving style of the vehicle, and changing the destination or route taken by the vehicle. The agent 124 may also provide emergency assistance to the user 128 during the communication session by supporting a critical health situation, notifying authorities after a collision, taking appropriate action if there is a fire in the vehicle, and taking appropriate action if there are conflicts between users sharing the vehicle. The agent 124 may also provide the user 128 with guidance or instructions during a standard operation or failure mode like entering the cabin or changing vehicles (*i*.*e*. user devices) after a breakdown or other failure of the vehicle. The agent 124 may also alert the user 128 to air quality problems or issues and lost or forgotten items inside the vehicle. Moreover, during the communication session, the agent 124 may also assist the user 128 in understanding and using the features of the autonomous vehicle.

Still further, the avatar system 100 enables the agent 124 to conduct a remote inspection of the shared autonomous vehicle. In the remote inspection, sensor data is sent to the cue capturing assembly 104 from the user device 108 (*i*.*e*. the vehicle) to indicate if the vehicle has been smoked in, if there is excessive moisture or dirt in the vehicle, and if the vehicle has been vandalized. The remote inspection may also include transmitting video data of the user device 108 from the user device 108 to the cue capturing assembly 104. The video data may be of the cockpit of the shared autonomous vehicle to enable the agent 124 to identify problems or issues with the vehicle. Based on the remote inspection, the agent 124 may take the vehicle out of service if warranted, or provide the vehicle with electronic instructions to drive itself to a repair facility.

In another embodiment, the avatar system 100 is configured to personalize the user experience of the user device 108. For example, during the communication session, the agent 124 may determine the user's mobility provider and social media preferences. Then the agent 124 can customize the display screen of the user device 108 to correspond to the user's preferences. Appropriate location-based advertising and media may also be shown on the display screen 246 based on the user's preferences, as determined by the agent 124 during the communication session.

The avatar system 100 is an improvement to computer functionality. The avatar system 100 improves the manner in which the user 108 understands the contextual details and other non-verbal cues during a conversation with a remote party (*i*.*e*. the agent 124). Specifically, the avatar system 100 improves the manner in which facial expressions and visual cues are transmitted as digital data over an electronic network 112 to a user device 108. As noted above, the agent video data 180 includes the facial expressions and visual cues 182 of the agent 124. The agent video data 180 could be transmitted to the user device 108 and displayed on the display screen 246. However, the very large file size makes transmission of the agent video data 180 inefficient, expensive, and complex. The result is that, unless a very stable and high-speed connection is established between the user device 108 and the cue capturing assembly 104, the video stream is choppy and fragmented making communication with the agent 124 difficult and inconvenient. The visual cue data 184 is orders of magnitude smaller in size than the agent video data 180 and conveys the same emotional and contextual information. Thus, the visual cue data 184 can be efficiently, inexpensively, and simply transmitted. The avatar 120 is smoothly rendered and transitions to different visual cue configurations seamlessly and without choppiness or fragmentation. The result is that the functionality of the avatar system 100 is improved because the avatar 120 conveys the emotional and contextual information of the agent 124 using only a fraction of the resources, as compared to transmitting the agent video data 180.

In other embodiments, of the avatar system 100 instead of transmitting the agent audio data 220 to the user device 108, the user device 108 is configured to output an electronic voice, such as from a virtual assistant. In this embodiment, the agent 124 uses the input device 148 to type textual data into the cue capturing assembly 104. The textual data are transmitted from the cue capturing assembly 104 to the user device 108 and a text-to-speech program stored in the memory 254 and run by the controller 258 converts the textual data into audio that is output by the audio output unit 242. Such an embodiment has the advantage of reducing further the amount of electronic data that is transmitted to the user device 108 during a communication session, as compared to transmitting the agent audio data 220.

Instead of 3D cartoon-style avatar 120, in other embodiments, the avatar 120 is a photo-realistic rendering of a human or a "visual clone" of a human. Similarly, in other embodiments, the avatar 120 includes a full body or an upper body (torso). Moreover, the avatar 120 may be displayed on the display screen 246 in front of a selected background image that corresponds to the context of the communication session. For example, in an assistance setting the background may be a calming or relaxing image, and in an emergency setting the background may be bright and attention-grabbing. Still further, in some embodiments, the avatar 120 is augmented into a real scene.

As described above, the appearance of the avatar 120 on the display screen 246 of the user device 108 is based at least in part on the visual cue data 184 generated from the agent video data 180. In another embodiment of the avatar system 100, the visual cue data 184 is generated at least in part from the agent audio data 220. In this embodiment, the encoder 176 processes the agent audio data 220 to determine the emotion or emotions presently exhibited by the agent 124 and then generates corresponding visual cue data 184. For example, the encoder 176 determines from the tone of the agent's voice that the agent 124 is happy or excited. The encoder 176 then generates the visual cue data 184 that causes the avatar 120 to have a happy or excited expression. The processing of the agent audio data 220 may also supplement the processing of the agent video data 180 in determining the visual cue data 184, such that the visual cue data 184 is generated based on both of the agent video data 180 and the agent audio data 220.

While the disclosure has been illustrated and described in detail in the drawings and foregoing description, the same should be considered as illustrative and not restrictive in character. It is understood that only the preferred embodiments have been presented and that all changes, modifications and further applications that come within the spirit of the disclosure are desired to be protected.

## Claims

1. A contextually-aware graphical avatar system, comprising:
a cue capturing assembly including a visual cue capturing unit configured to generate agent video data of a human agent, and a visual cue encoder configured to process the agent video data to generate visual cue data corresponding to visual cues of the human agent; and
a user device configured to receive the visual cue data, the user device including (i) an avatar rendering unit configured to modify a graphical avatar based on the visual cue data, such that visual cues of the graphical avatar correspond to the visual cues of the human agent, and (ii) a display screen configured to display the modified graphical avatar in order to convey the visual cues of the human agent,
wherein the graphical avatar system increases the efficiency with which the visual cues of the human agent are conveyed as compared to receiving and to displaying the agent video data on the display screen of the user device.

2. The contextually-aware graphical avatar system of claim 1, wherein:
the cue capturing assembly further includes a camera configured to generate the agent video data and an audio capturing unit configured to record audio of the human agent as agent audio data,
the user device is configured to receive the agent audio data, and
the user device further includes a speaker configured to generate audio based on the agent audio data.

3. The contextually-aware graphical avatar system of claim 1, wherein:
the cue capturing assembly further includes a first network adapter configured to transmit the visual cue data by way of an electronic network, and
the user device further includes a second network adapter configured to receive the transmitted visual cue data from the electronic network.

4. The contextually-aware graphical avatar system of claim 3, wherein:
transmitting the agent video data by way of the electronic network uses a first network bandwidth,
transmitting the visual cue data by way of the electronic network uses a second network bandwidth, and
the second network bandwidth is less than the first network bandwidth.

5. The contextually-aware graphical avatar system of claim 1, wherein the agent video data is not transmitted to the user device.

6. The contextually-aware graphical avatar system of claim 5, wherein the cue capturing assembly includes a memory configured to store the agent video data and the visual cue data.

7. The contextually-aware graphical avatar system of claim 1, wherein the visual cue data includes at least one of eyebrow data, eye data, and mouth data.

8. The contextually-aware graphical avatar system of claim 7, wherein:
the eye data includes eye position data, eye size data, pupil data, and eye color data, and
the mouth data includes lip data, tongue data, and teeth data.

9. The contextually-aware graphical avatar system of claim 1, wherein:
the visual cue data during a first time period corresponds to a first facial expression made by the human agent,
the visual cue data during a second time period corresponds to a second facial expression made by the human agent,
the modified graphical avatar exhibits the first facial expression based on the visual cue data of the first time period,
the modified graphical avatar exhibits the second facial expression based on the visual cue data of the second time period, and
the first facial expression is different from the second facial expression.

10. The contextually-aware graphical avatar system of claim 9, wherein:
the human agent changes from the first facial expression to the second facial expression based on a context of a communication session between the human agent and a user of the user device, and
the modified graphical avatar as displayed on the display screen conveys the context of the communication session to the user.

11. The contextually-aware graphical avatar system of claim 1, wherein the user device is configured as an autonomous vehicle.

12. A method of generating and displaying a contextually-aware graphical avatar on a user device, the method comprising:
capturing agent video data of a human agent with a cue capturing assembly;
encoding the agent captured video data to generate visual cue data corresponding to visual cues of the human agent with a visual cue encoder of the cue capturing assembly;
transmitting the visual cue data from the cue capturing assembly to the user device without transmitting the captured agent video data to the user device;
modifying the graphical avatar based on the transmitted visual cue data with an avatar rendering unit of the user device, such that visual cues of the graphical avatar correspond to the visual cues of the human agent;
displaying the modified graphical avatar on a display screen of the user device in order to convey the visual cues of the human agent to a user of the user device; and
conveying the visual cues of the human agent to the user using the modified graphical avatar without transmitting the captured agent video data to the user device to increase the efficiency with which the visual cues of the human agent are conveyed as compared to receiving and to displaying the captured agent video data on the display screen of the user device.

13. The method according to claim 12, further comprising:
recording agent audio data of the human agent with an audio capturing unit of the cue capturing assembly;
transmitting the recorded agent audio data from the cue capturing assembly to the user device; and
emitting audio corresponding to the transmitted agent audio data with a speaker of the user device.

14. The method according to claim 13, further comprising:
recording user audio data of the user with a microphone of the user device;
transmitting the recorded user audio data from the user device to the cue capturing assembly; and
emitting audio corresponding to the transmitted user audio data with a speaker of the cue capturing assembly.

15. The method according to claim 12, further comprising:
generating visual cue data during a first time period corresponding to a first facial expression made by the human agent;
generating visual cue data during a second time period corresponding to a second facial expression made by the human agent;
modifying the graphical avatar to exhibit the first facial expression based on the visual cue data of the first time period; and
modifying the graphical avatar to exhibit the second facial expression based on the visual cue data of the second time period,
wherein the first facial expression is different from the second facial expression.

16. The method according to claim 12, further comprising:
generating visual cue data while the human agent makes a gesture;
modifying the graphical avatar to exhibit the gesture based on the generated visual cue data; and
displaying the modified graphical avatar exhibiting the gesture on the display screen of the user device.

17. The method according to claim 12, wherein:
transmitting the visual cue data by way of an electronic network with a first network adapter of the cue capturing assembly; and
receiving the transmitted visual cue data with a second network adapter of the user device.
